# EUROPÄISCHE PATENTSCHRIFT

(11) **EP 1 084 432 B1**
(45) Veröffentlichungstag und Bekanntmachung des Hinweises auf die Patenterteilung: **21.04.2004**
(21) Anmeldenummer: 99927772.6
(22) Anmeldetag: 27.05.1999
(51) Int. Cl.: G02B 5/32, G03B 21/62

(54) **PROJEKTIONSSCHIRM**
PROJECTION SCREEN
ECRAN DE PROJECTION

(30) Priorität: 05.06.1998 DE 19825192
(43) Veröffentlichungstag der Anmeldung: 21.03.2001
(73) Patentinhaber: Gutjahr, Jörg, 51588 Nümbrecht (DE)
(72) Erfinder: Gutjahr, Jörg, 51588 Nümbrecht (DE)
(74) Vertreter: von Kirschbaum, Alexander, Dipl.-Ing.
(86) Internationale Anmeldenummer: PCT/EP1999/003658
(87) Internationale Veröffentlichungsnummer: WO 1999/064902

(56) Entgegenhaltungen:
- WO-A-96/07953
- DE-A- 2 435 904
- GB-A- 2 287 554
- US-A- 4 500 163
- US-A- 5 162 929

## Beschreibung

Die Erfindung betrifft einen Projektionsschirm, insbesondere einen Projektionsschirm für großflächige Bildprojektionen.

Bei großflächigen Bildprojektionen, wie beispielsweise in Kinos, werden Projektionsleinwände eingesetzt. Auf die Projektionsleinwände werden von einem auf der Betrachterseite vorgesehenen Projektor Bilder projiziert. Das auf die Projektionsleinwand treffende Licht wird von der Projektionsleinwand gestreut, so daß für den Betrachter auf der Projektionsleinwand das Bild sichtbar wird. Da derartige Projektionsleinwände auch Fremdlicht, wie z.B. Tageslicht, streuen, muß der Raum abgedunkelt sein. Im Freien können derartige Projektionsleinwände nur nachts eingesetzt werden, wobei außerdem kein Fremdlicht, z.B. durch Straßenlaternen, auf die Projektionsleinwand auftreffen darf. Bei derartigen Projektionsleinwänden verschlechtert sich bereits bei geringem Fremdlichtanteil die Bildqualität.

Ferner sind Projektionssysteme bekannt, bei denen der Projektor auf der Rückseite der Projektionsleinwand angeordnet ist. Hierbei wird das Bild durch Rückprojektion auf der Projektionsleinwand, die auftreffendes Licht ebenfalls streut, abgebildet.

In der Zeitschrift APPLIED OPTICS, (12, 1973) 21.80-84 ist ein Mikrofilm-Sichtgerät beschrieben, bei dem mittels eines Hologramms die Kombination einer Streuscheibe mit einer Linse realisiert ist. Das Hologramm dient als Bildschirm zur Sichtbarmachung der durch eine Vergrößerungslinse projizierten Mikrofilmbilder. Das Hologramm hat bei Beleuchtung mit jeglichem Licht die Gestalt einer Mattscheibe, d.h. es ist milchig und undurchsichtig. Der Zweck des Hologramms besteht darin, eine voluminöse und aufwendige Linse zu ersparen.

Aus DE 43 30 384 A1 ist eine Leuchttafel bekannt, auf der Bildhologramme, welche Flächen- oder Linienmuster bilden, gespeichert sind. Die Hologramme in verschiedenfarbigen Feldern sind unter unterschiedlichen Beleuchtungswinkeln erzeugt worden, so daß die Felder dem Betrachter unterschiedliche Farben darbieten. Es kann jeweils nur das gespeicherte Muster sichtbar gemacht werden.

Aufgabe der Erfindung ist es, einen Projektionsschirm zu schaffen, der insbesondere für großflächige Bildprojektionen auch bei einem großen Fremdlichtanteil einsetzbar ist.

Die Lösung der Aufgabe erfolgt erfindungsgemäß durch die Merkmale des Patentanspruchs 1.

Der erfindungsgemäße Projektionsschirm weist mehrere in einer Ebene angeordnete holographisch-optische Elemente auf. Auf den eine geschlossene Fläche bildenden holographisch-optischen Elementen kann ein Bild mittels Rückprojektion dargestellt werden. Hierbei wird auf jedem einzelnen holographisch-optischen Element ein Bildbereich eines projizierten Bildes abgebildet. Dadurch wird das zu projizierende Bild quasi in einzelne Pixel unterteilt und jedes Pixel von einem holographisch-optischen Element dargestellt.

Jedes holographisch-optische Element weist mindestens ein Beugungsgitter und mindestens eine Linse auf. Durch das Beugungsgitter werden beispielsweise Lichtbündel roter, grüner und blauer Farbauszüge des zu projizierenden Bildes unterschiedlich gebeugt. Durch die Linse wird das zu projizierende Bild in einer Bildebene abgebildet.

Die bei dem erfindungsgemäßen Projektionsschirm verwendeten holographisch-optischen Elemente sind derart ausgebildet, daß die Lichtbündel unterschiedlicher Farbauszüge eines zu projizierenden Bildes jeweils zu einem gemeinsamen Lichtaustrittsbündel mit demselben Lichtaustrittswinkel zusammengefaßt sind. Somit wird von jedem holographisch-optischen Element in Richtung des Betrachters ein einziges Lichtbündel abgegeben, das sämtliche Farbinformationen des entsprechenden Bildbereichs enthält. Jedes holographisch-optische Element erzeugt somit ein einziges gerichtetes Lichtbündel. Die bei dem erfindungsgemäßen Projektionsschirm verwendeten holographisch-optischen Elemente sind transparent und es tritt nur eine geringe Streuung des auf die holographisch-optischen Elemente auftreffenden Lichts auf. Somit wird auch Fremdlicht annähernd nicht gestreut. Ferner sind der Kontrast und die Leuchtdichte des erfindungsgemäßen Projektionsschirms höher als bei herkömmlichen Projektionsleinwänden. Der Projektionsschirm kann daher auch für großflächige Bildprojektionen bei Tageslicht eingesetzt werden.

Der Projektionsschirm hat die Wirkung, daß bei Betrachtung aus der vorgesehenen Richtung farbige Bilder gesehen werden, die aus einer Kombination der verschiedenen Farbanteile bestehen. Bei Betrachtung aus einer anderen Richtung ist der Projektionsschirm dagegen klar und durchsichtig. Der Projektionsschirm ist auch von der Rückseite her durchsichtig. Beispielsweise kann der Projektionsschirm aus einer Fensterscheibe eines Raumes bestehen. Sind die Projektoren im Innern des Raumes angeordnet und auf die Fensterscheibe gerichtet, so ist das projizierte Bild von außen sichtbar. Gleichwohl gelangt Tageslicht durch das Fenster hindurch in den Raum und Personen, die sich im Raum befinden, können, ohne daß sie das Bild sehen, durch das Fenster nach draußen schauen.

Vorzugsweise unterscheiden sich die Lichtaustrittswinkel von in vertikaler Richtung beabstandeten holographischen Elementen derart, daß sich die Lichtaustrittsbündel in einer Betrachtungsebene schneiden. Ferner sind die holographisch-optischen Elemente vorzugsweise so ausgebildet, daß die Lichtaustrittsbündel nur horizontal aufgeweitet werden. Durch die horizontale Aufweitung gelangt auch von im Seitenbereich des Projektionsschirms angeordneten holographisch-optischen Elementen Licht der Austrittsbündel in das Auge des Betrachters. Dadurch, daß die Lichtaustrittsbündel in vertikaler Richtung nicht aufgeweitet werden, sind Lichtintensitätsverluste vermieden.

Vorzugsweise werden für den Projektionsschirm zwei Arten von holographisch-optischen Elementen verwendet. Die erste Art besteht aus einem einzigen Beugungsgitter und einer oder mehreren Linsen. Damit das Beugungsgitter ein gemeinsames Lichtaustrittsbündel in Richtung des Betrachters abgibt, wird die Rückseite des holographisch-optischen Elements von nach Farbauszügen getrennten Lichtbündeln bestrahlt. Auf das holographisch-optische Element wird somit ein die roten, ein die grünen und ein die blauen Farbauszüge des zu projizierenden Bildes enthaltendes Lichtbündel projiziert. Die Winkel zwischen den Lichtbündeln sind so gewählt, daß die Lichtbündel nach der farbauszugsspezifischen Beugung durch das Beugungsgitter zu einem gemeinsamen Lichtaustrittsbündel zusammenfallen.

Bei der zweiten Art der holographisch-optischen Elemente wird nur ein gemeinsames Lichtbündel, in dem sämtliche Farbauszüge des zu projizierenden Bildes enthalten sind, auf die Rückseite des holographisch-optischen Elements projiziert. Das gemeinsame Lichtbündel weist somit sämtliche Lichtbündel der einzelnen Farbauszüge auf. Das holographisch-optische Element weist für jeden Farbauszug ein gesondertes Gitter und wiederum eine oder mehrere Linsen auf. Die Beugungsgitter sind so aufeinander abgestimmt, daß die einzelnen Farbauszüge des auftreffenden Lichtbündels nicht voneinander getrennt werden, sondern als gemeinsames Lichtaustrittsbündel mit demselben Lichtaustrittswinkel in Richtung des Betrachters abgegeben werden.

Ebenso ist es möglich, die beiden vorstehenden Arten von holographisch-optischen Elementen zu kombinieren sowie entsprechend zu modifizieren, daß anstatt der Grundfarben Rot, Grün und Blau die Grundfarben Magenta, Zyan und Yellow verwendet werden.

Bei einem erfindungsgemäßen Projektionssystem wird ein Projektionsschirm mit der ersten Art holographisch-optischer Elemente verwendet. Ferner weist das Projektionssystem einen Projektor zur Erzeugung der einzelnen Lichtbündel der Farbauszüge auf. Da die Rückseite der ersten Art holographisch-optischer Elemente von nach Farbauszügen getrennten Lichtbündeln beleuchtet wird, weist der Projektor für jedes zu erzeugende Lichtbündel eine Projektionseinrichtung auf. Erfindungsgemäß ist der Abstand der Projektionseinrichtungen auf die farbspezifischen Beugungswinkel des in jedem holographisch-optischen Element enthaltenen Beugungsgitters derart abgestimmt, daß von jedem holographisch-optischen Element die Lichtbündel der Farbauszüge zu einem gemeinsamen Lichtaustrittsbündel mit demselben Lichtaustrittswinkel zusammengefaßt werden. Bei diesem Projektionssystem kann als Projektor ein RGB-Projektor, der einen roten, einen grünen und einen blauen Farbauszug des zu projizierenden Bildes erzeugt, verwendet werden. Mit dem Projektionssystem können Bilder mit hoher Leuchtdichte und hohem Kontrast erzeugt werden, da das gesamte auf die Rückseite des Projektionsschirms von dem Projektor projizierte Licht in Richtung des Betrachters gebeugt wird.

Bei einem weiteren erfindungsgemäßen Projektionssystem wird ein Projektionsschirm verwendet, der holographisch-optische Elemente der zweiten Art aufweist. Der Projektor dieses Projektionssystems weist nur eine Projektionseinrichtung auf. Von der Projektionseinrichtung wird ein gemeinsames Lichtbündel, in dem die einzelnen Lichtbündel je Farbauszug enthalten sind, auf die Rückseite des Projektionsschirms projiziert. Jedes holographisch-optische Element weist für jedes Lichtbündel eines Farbauszugs je ein Beugungsgitter auf. Die Beugungsgitter sind derart aufeinander abgestimmt, daß von jedem holographisch-optischen Element ein gemeinsames Lichtaustrittsbündel in Richtung des Betrachters abgegeben wird. Da bei diesem Projektionssystem für jedes Lichtbündel ein gesondertes Gitter in jedem holographisch-optischen Element vorgesehen ist, ist die Leuchtdichte bei diesem Projektionssystem geringer als bei vorstehend beschriebenem Projektionssystem. Das Projektionssystem kann dennoch für großflächige Bildprojektionen bei Tageslicht eingesetzt werden. Ein besonderer Vorteil dieses Projektionssystems liegt darin, daß ein herkömmlicher, weißes Licht abgebender Projektor verwendet werden kann.

Bei beiden vorstehenden Projektionssystemen ist der Projektor üblicherweise nicht mittig zum Projektionsschirm angeordnet, sondern in vertikaler Richtung versetzt. Die dadurch entstehenden Verzerrungen des auf den Projektionsschirm projizierten Bildes können durch das Anordnen von Entzerrungslinsen im Strahlengang der einen bzw. jeder Projektionseinrichtung aufgehoben werden. Ebenso kann dem Projektor eine elektronische Entzerrungseinrichtung zugeordnet sein, durch die das zu projizierende Bild entsprechend verzerrt wird, so daß auf dem Projektionsschirm ein unverzerrtes Bild erscheint.

Nachfolgend wird die Erfindung anhand bevorzugter Ausführungsformen unter Bezugnahme auf die anliegenden Zeichnungen näher erläutert.

Es zeigen:
- Fig. 1: eine schematische Seitenansicht eines holographisch-optischen Elements der ersten Art und eines entsprechenden Projektors,
- Fig. 2: eine schematische Draufsicht des in Fig. 1 dargestellten holographisch-optischen Elements,
- Fig. 3: eine schematische Seitenansicht eines Projektionssystems, mit holographisch-optischen Elementen der ersten Art,
- Fig. 4: einen Ausschnitt einer schematischen Vorderansicht eines Projektionsschirms,
- Fig. 5: eine schematische Seitenansicht eines einzelnen holographisch-optischen Elements,
- Fig. 6: eine schematische Draufsicht des in Fig. 5 dargestellten holographisch-optischen Elements,
- Fig. 7: eine Prinzipskizze der Herstellung eines holographisch-optischen Elements,
- Fig. 8: eine schematische Seitenansicht eines holographisch-optischen Elements der zweiten Art und eines entsprechenden Projektors,
- Fig. 9: eine schematische Vorderansicht einer Ausführungsform eines holographisch-optischen Elements der zweiten Art und
- Fig. 10: eine schematische Seitenansicht einer weiteren Ausführungsform des Projektionssystems.

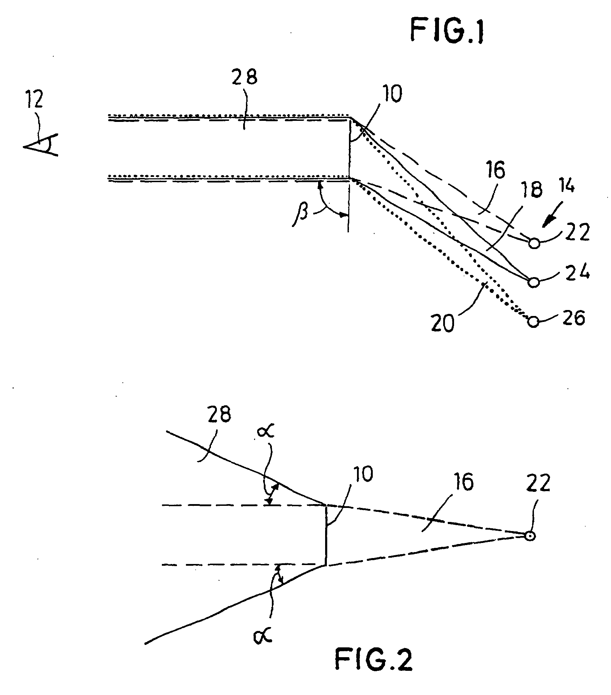

In den Fign. 1-3 ist ein Projektionssystem dargestellt, bei dem die erste Art holographisch-optischer Elemente 10 verwendet wird. Auf eine Rückseite des holographisch-optischen Elements 10, d.h. auf die einem Betrachter 12 abgewandte Seite, werden von einem Projektor 14 drei Lichtbündel 16,18,20 projiziert. Zur Erzeugung der Lichtbündel 16,18,20 für jeweils unterschiedliche Farbauszüge eines zu projizierenden Bildes weist der Projektor 14 drei Projektionseinrichtungen 22,24,26 auf. Bei dem Projektor 14 handelt es sich um einen herkömmlichen RGB-Projektor, der mittels der Projektionseinrichtung 22 ein Lichtbündel 16 für die blauen Farbauszüge des Bildes, mittels der Projektionseinrichtung 24 ein Lichtbündel 18 für die grünen Farbauszüge des Bildes und mittels der Projektionseinrichtung 26 ein Lichtbündel 20 für die roten Farbauszüge des Bildes erzeugt.

In Fig. 1 sind die Bereiche der drei Lichtbündel 16,18,20 dargestellt, die auf die Rückseite eines einzelnen holographisch-optischen Elements 10 auftreffen. Durch die drei Lichtbündel 16,18,20 werden die gesamten Farbinformationen eines durch das holographisch-optische Element 10 dargestellten Bildbereichs auf das holographisch-optische Element 10 projiziert.

Die drei Lichtbündel 16,18,20 werden durch das holographisch-optische Element 10 unterschiedlich gebeugt, so daß ein Lichtaustrittswinkel β für jedes Lichtbündel 16,18,20 identisch ist. Dadurch wird durch das holographisch-optische Element 10 ein gemeinsames Lichtaustrittsbündel 28 erzeugt, das in Richtung des Betrachters 12 ausgerichtet ist. Ausschlaggebend dafür, daß die drei Lichtbündel 16,18,20 zu einem gemeinsamen Lichtbündel 28 zusammengefaßt werden, sind die Ausführung eines an dem holographisch-optischen Element 10 vorgesehenen Beugungsgitters und die Einfallswinkel der einzelnen Lichtbündel 16,18,20. Die Einfallswinkel der Lichtbündel 16,18,20 können durch Verändern der Abstände der Projektionseinrichtung 22,24,26 eingestellt werden.

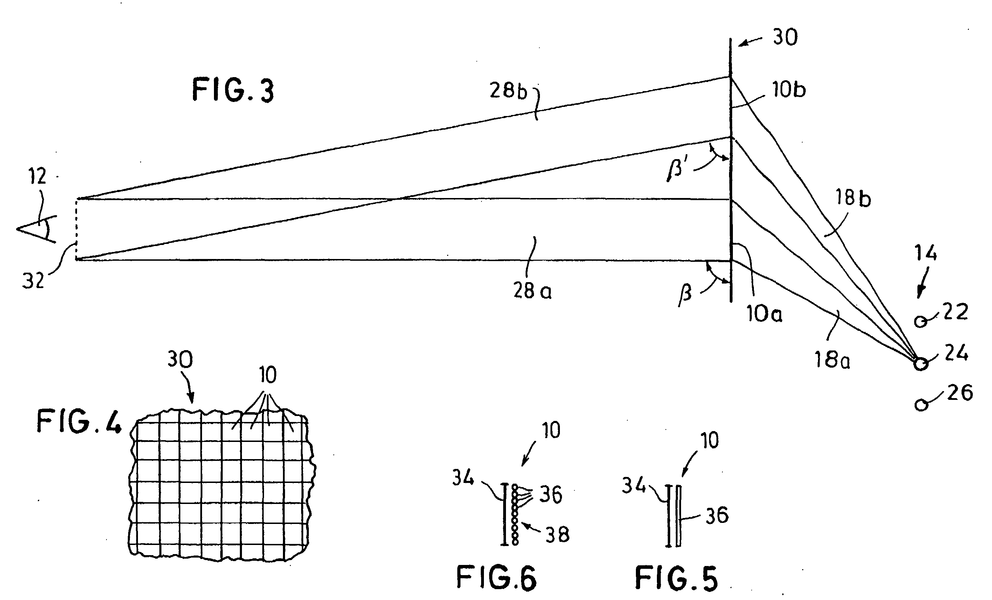

Das holographisch-optische Element 10 ist so ausgebildet, daß die Lichtbündel 16,18,20 in vertikaler Richtung nicht aufgeweitet werden (Fig. 1). In horizontaler Richtung werden die Lichtbündel 16,18,20 um einen Winkel α (Fig. 2) aufgeweitet. Hierauf wird später anhand der Fign. 5 und 6 näher eingegangen.

In Fig. 3 ist ein Projektionsschirm 30 eines Projektionssystems dargestellt, in dem die anhand der Fign. 1 und 2 beschriebenen holographisch-optischen Elemente 10 verwendet werden. Von jedem holographisch-optischen Element 10 wird ein anderer Bildbereich des zu projizierenden Bildes dargestellt, so daß das zu projizierende Bild durch ein Raster unterteilt ist, wobei jeder Rasterpunkt durch ein anderes holographisch-optisches Element 10 abgebildet wird. Dadurch erscheint auf dem Projektionsschirm eine Vergrößerung des zu projizierenden Bildes, das durch die einzelnen holographisch-optischen Elemente 10 zusammengesetzt ist (Fig. 4).

In dem Ausschnitt des Projektionsschirms 30 sind zwei holographisch-optische Elemente 10a,10b herausgegriffen. Zur Verdeutlichung sind nur die grünen Lichtbündel 18a,18b dargestellt, die von der Projektionseinrichtung 24 auf die Rückseiten der holographisch-optischen Elemente 10a,10b projiziert werden. Die von den Projektionseinrichtungen 22,24 erzeugten Lichtbündel werden von den holographisch-optischen Elementen 10a,10b auf die anhand Fig. 1 beschriebene Weise zusammen mit den grünen Lichtbündeln 18a,18b zu gemeinsamen Lichtaustrittsbündeln 28a,28b zusammengefaßt. Die holographisch-optischen Elemente 10a,10b weisen einen vertikalen Abstand zueinander auf und sind so ausgebildet, daß die Lichtaustrittsbündel 28a,28b einen unterschiedlichen Lichtaustrittswinkel β bzw. β' haben. Der Lichtaustrittswinkel β' des bzgl. des Betrachters 12 weiter oben in dem Projektionsschirm 30 angeordneten holographisch-optische Elements 10b ist kleiner als der Winkel β des tiefer angeordneten holographisch-optische Elements 10a. Das holographisch-optische Element 10b ist so ausgebildet, daß das Lichtaustrittsbündel 28b das Lichtaustrittsbündel 28a in einer gemeinsamen Betrachtungsebene 32 schneidet. Die übrigen holographisch-optische Elemente 10 des Projektionsschirms 30 sind ebenfalls so ausgebildet, daß die Größe des jeweiligen Lichtaustrittswinkels β derart ist, daß sich sämtliche Lichtaustrittsbündel 28 der holographisch-optischen Elemente in der Betrachtungsebene 32 schneiden. Je höher ein holographisch-optische Element 10 gegenüber dem Betrachter 12 in dem Projektionsschirm 30 angeordnet ist, desto kleiner ist der Winkel β. Entsprechend nimmt die Größe des Winkels β zu, wenn ein holographisch-optisches Element 10 tiefer als der Betrachter 12 angeordnet ist. Die Lichtaustrittswinkel β von in einer horizontalen Zeile angeordneten holographisch-optischen Elementen sind gleich.

Da der Projektor 14 in vertikaler Richtung unter dem Projektionsschirm 30 angeordnet ist, wird das Bild auf dem Projektionsschirm 30 verzerrt abgebildet. Um das Bild zu entzerren, sind in den Strahlengängen des Projektors 14 Shift-Linsen vorgesehen. Ebenso kann das Bild entzerrt auf dem Projektionsschirm 30 abgebildet werden, indem das zu projizierende Bild rechnerisch durch eine elektronische Entzerrungseinrichtung entzerrt wird.

Die holographisch-optischen Elemente 10 weisen eine Filmebene 34 (Fign. 5 und 6) auf, in der das Beugungsgitter vorhanden ist, durch das die Lichtbündel 14,18,20 der unterschiedlichen Farbauszüge unterschiedlich stark gebeugt werden. Auf der Rückseite der holographisch-optischen Elemente 10 sind mehrere Zylinderlinsen 36 vorgesehen, die parallel zueinander in einer Ebene angeordnet sind, so daß eine Rasterzylinderlinse 38 gebildet ist. Der Abstand benachbarter Zylinderlinsen 36 ist im Verhältnis zum Abstand des Betrachters 12 von dem Projektionsschirm 30 gering. Vorzugsweise haben die Zylinderlinsen 36 einen Durchmesser von etwa 1 mm und sind so angeordnet, daß sich benachbarte Zylinderlinsen 36 berühren. Die Rasterzylinderlinse 38 bewirkt, daß die auf das holographisch-optische Element 10 treffenden Lichtbündel 16,18,20 nur horizontal monochromatisch aufgeweitet werden (Fig. 2). Der Querschnitt der Zylinderlinsen ist vorzugsweise kreisförmig; es kann sich aber auch um elliptisch oder anders gekrümmte Zylinderlinsen handeln. Von den Zylinderlinsen 36 wird das zu projizierende Bild in den Fokallinien abgebildet. Da die Zylinderlinsen 36 vorzugsweise einen Durchmesser von etwa 1 mm aufweisen, sind für den Betrachter 12 die parallel zueinander verlaufenden Fokallinien nicht mehr getrennt voneinander erkennbar, so daß sich ein geschlossenes Bild ergibt. Die einzelnen holographisch-optischen Elemente 10 weisen beispielsweise eine Größe von 20 x 30 mm auf.

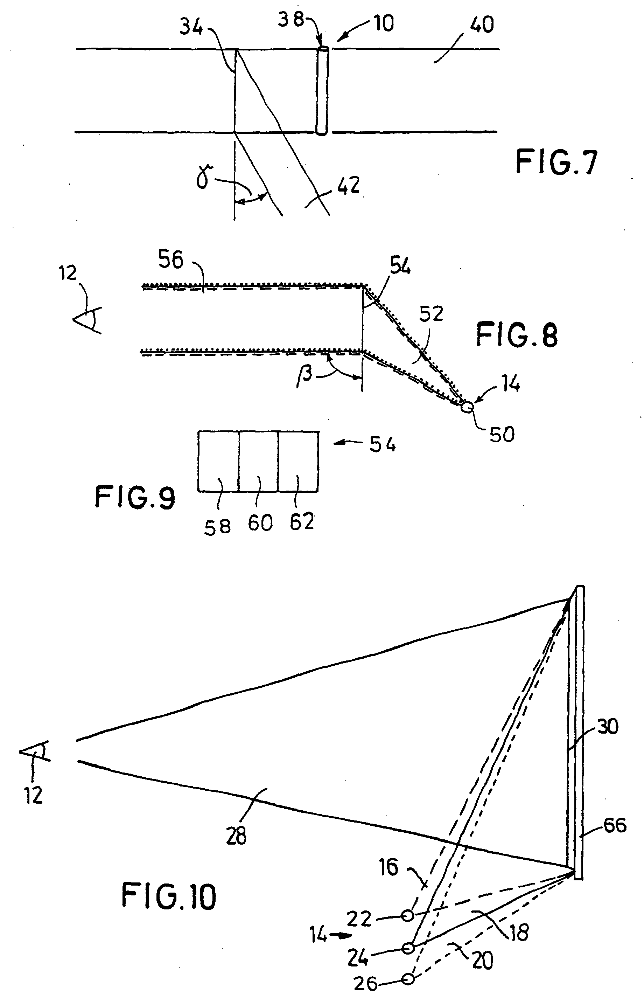

In vertikalem Abstand zueinander angeordnete holographisch-optische Elemente 10 müssen ein unterschiedliches Beugungsgitter aufweisen, da die Lichtaustrittsbündel in unterschiedlichen Lichtaustrittswinkeln β aus dem holographisch-optischen Element austreten müssen (Fig. 3). Zur Herstellung des Beugungsgitters wird der Film 34 durch paralleles Licht 40 (Fig. 7) sowie durch kohärentes paralleles Licht 42 gleicher Wellenlänge belichtet. Das Licht 40 ist senkrecht zum Film 34 ausgerichtet. Das Licht 42 wird unter einem Winkel y auf den Film 34 gerichtet. Der Winkel y entspricht beispielsweise dem Winkel zwischen dem grünen Lichtbündel 18 und der Rückseite des holographisch-optischen Elements 10 (Fig. 1). Durch den Winkel y des zur Belichtung des Films 34 verwendeten Lichts 42 ist somit die vertikale Lage des holographisch-optischen Elements 10 in dem Projektionsschirm 30 festgelegt. Je höher ein holographisch-optisches Element 10 in dem Projektionsschirm 30 angeordnet wird, desto kleiner muß der Winkel y bei der Belichtung des Films 34 sein.

Durch die Überlagerung des Lichts 40 und des Lichts 42, die dieselbe Wellenlänge aufweisen, bildet sich auf dem Film 34 ein Interferenzmuster. Durch das Entwickeln des Films 34 wird ein dem Interferenzmuster entsprechendes Beugungsgitter hergestellt. Nach dem Entwickeln des Films wird die Rasterzylinderlinse 38 auf die Rückseite des Films gelegt und die Lage des Films 34 zur Rasterzylinderlinse 38 beispielsweise zwischen Glas- oder Kunststoffplatten fixiert.

Aus den Fign. 8 und 9 ist ein weiteres Projektionssystem ersichtlich, bei dem die zweite Art der holographisch-optischen Elemente verwendet wird. Hierbei wird von einem Projektor 14 mit einer Projektionseinrichtung 50 ein Lichtbündel 52 auf die Rückseite eines holographisch-optischen Elements 54 projiziert. Da von der Projektionseinrichtung 50 weißes Licht auf das zu projizierende Bild abgegeben wird, sind in dem Lichtbündel 52 das Lichtbündel für den roten, den grünen und den blauen Farbauszug des zu projizierenden Bildes zusammengefaßt, die entsprechend Fig. 1 durch punktierte, durchgezogene bzw. gestrichelte Linien dargestellt sind. Das holographisch-optische Element 54 ist so aufgebaut, daß es das Lichtbündel 52 nicht in die einzelnen farbspezifischen Lichtbündel aufspaltet, sondern entsprechend dem holographisch-optischen Element 10 ein gemeinsames Lichtbündel 56 mit demselben Lichtaustrittswinkel β in Richtung des Betrachters 12 abgibt.

Hierzu weist das holographisch-optische Element 54 drei unterschiedliche Beugungsgitter 58,60,62 (Fig. 9) auf, wobei beispielsweise das Beugungsgitter 58 den roten, das Beugungsgitter 60 den grünen und das Beugungsgitter 62 den blauen Farbanteil des Lichtbündels 52 beugt. Anstelle der Anordnung von drei Beugungsgittern 58,60,62 nebeneinander ist es auch möglich, drei Filme unabhängig voneinander zu belichten und die Beugungsgitter übereinander anzuordnen. Die Herstellung der Beugungsgitter wird entsprechend des anhand der Fig. 7 beschriebenen Herstellungsverfahrens durchgeführt, wobei zur Erzeugung nebeneinander angeordneter Beugungsgitter 58,60,62 auf den. Film 34 eine Maske gelegt wird und der Film zur Erzeugung des ersten Beugungsgitters 58 mit Licht unter einem entsprechenden Einfallswinkel y belichtet wird. Anschließend wird die Maske verschoben und der Film 34 zur Erzeugung des Beugungsgitters 60 mit Licht unter entsprechend verändertem Einfallswinkel γ belichtet. Zur Herstellung des dritten Beugungsgitters 62 wird die Maske wiederum verschoben und der Film 34 mit Licht unter einem dritten Einfallswinkel y belichtet. Die Erzeugung von Beugungsgittern mit unterschiedlichen Lichtaustrittswinkeln β wird entsprechend der anhand der Fig. 7 beschriebenen Herstellung, d.h. durch Veränderung des Winkels y, durchgeführt. Hierbei haben das Licht 40 und das Licht 42 zur Erzeugung des Interferenzmusters dieselbe Wellenlänge.

Im übrigen entspricht das vorstehend anhand der Fign. 8 und 9 beschriebene Projektionssystem dem in den Fign. 1-4 dargestellten Projektionssystem. Die Lichtbündel werden in horizontaler Richtung ebenfalls um den Winkel α aufgeweitet (Fig. 2) und der Projektionsschirm 30 ist ebenfalls aus nebeneinander angeordneten holographisch-optischen Elementen 54 zusammengesetzt. Die holographisch-optischen Elemente 54 weisen ebenfalls eine Rasterzylinderlinse 38 und einen oder mehrere belichtete Filme auf, die wie vorstehend beschriebenen belichtet wurden.

Bei einer weiteren Ausführungsform eines Projektionssystems ist der Projektor 14 (Fig. 10) bzgl. des Projektionsschirms 30 auf der Seite des Betrachters 12 angeordnet. Hinter dem Projektionsschirm 30 ist ein Spiegel 66 vorgesehen. Durch den Spiegel 66 werden die von den Projektionseinrichtungen 22,24,26 erzeugten Lichtbündel 16,18,20 auf die Rückseite des Projektionsschirms 30 reflektiert. Somit handelt es sich auch bei dieser Anordnung des Projektors 14 um eine Rückprojektion. Anstatt der drei Projektionseinrichtungen 22,24,26 kann auch die einzelne Projektionseinrichtung 50 (Fig. 8) und in dem Projektionsschirm 30 dementsprechend die zweite Art der holographisch-optischen Elemente 54 vorgesehen werden.

## Patentansprüche

1. Projektionsschirm, insbesondere für großflächige Bildprojektionen, zum Darstellen von Bildern mittels Rückprojektion, mit mehreren in einer Abbildungsebene angeordneten holographisch-optischen Elementen (10), auf denen jeweils Teilbereiche eines zu projizierenden Bildes abbildbar sind und die derart konfiguriert sind, dass sie die optischen Eigenschaften eines Beugungsgitters und mindestens einer Linse haben, wobei jedes holographisch-optische Element (10) derart ausgebildet ist, dass es Lichtbündel (16,18,20) unterschiedlicher Farbauszüge des zu projizierenden Teilbereichs, die unter verschiedenen Lichteintrittswinkeln einfallen, zu einem gemeinsamen Lichtaustrittsbündel (28) mit einheitlichem Lichtausstrittswinkel (β) zusammenfaßt
**dadurch gekennzeichnet,**
**dass** die holographisch-optischen Elemente (10) jeweils nur ein Beugungsgitter aufweisen, das die Lichtbündel (16,18,20) der einzelnen Farbauszüge mit unterschiedlichen Beugungswinkel beugt und
**dass** jedes holographisch-optische Element (10,54) eine Rasterzylinderlinse (38) aus mehreren Zylinderlinsen (36) aufweist.

2. Projektionsschirm, insbesondere für großflächige Bildprojektionen, zum Darstellen von Bildern mittels Rückprojektion, mit mehreren in einer Abbildungsebene angeordneten holographisch-optischen Elementen (54), auf denen jeweils Teilbereiche eines zu projizierenden Bildes abbildbar sind und die derart konfiguriert sind, dass sie die optischen Eigenschaften mehrerer Beugungsgitter und mindestens einer Linse haben, wobei jedes holographisch-optische Element (54) derart ausgebildet ist, dass es ein gemeinsames Lichtbündel (52) sämtlicher Farbauszüge des zu projizierenden Teilbereichs, die unter demselben Lichteintrittswinkel einfallen, zu einem gemeinsamen Lichtaustrittsbündel (56) mit einheitlichem Lichtausstrittswinkel (β) zusammenfaßt,
**dadurch gekennzeichnet,**
**dass** jedes holographisch-optische Element (10,54) eine Rasterzylinderlinse (38) aus mehreren Zylinderlinsen (36) aufweist.

3. Projektionsschirm nach Anspruch 1 oder 2, **dadurch gekennzeichnet, dass** der Abstand der Betrachtungsebene (32) von der Rasterzylinderlinse (38) gegenüber dem Abstand benachbarter Zylinderlinsen (36) groß ist.

4. Projektionsschirm nach einem der Ansprüche 1-3, **dadurch gekennzeichnet, dass** die Zylinderlinsen (36) in einer Ebene angeordnet sind.

5. Projektionsschirm nach einem der Ansprüche 2-4, **dadurch gekennzeichnet, dass** die holographisch-optischen Elemente (54) für das Lichtbündel (52) jedes Farbauszugs je ein Beugungsgitter (58,60,62) aufweisen.

6. Projektionsschirm nach einem der Ansprüche 2-5, **dadurch gekennzeichnet, dass** das holographisch-optische Element (54) drei unterschiedliche Beugungsgitter (58,60,62) aufweist, die entweder nebeneinander oder übereinanderliegend angeordnet sind.

7. Projektionsschirm nach einem der Ansprüche 1-6, **dadurch gekennzeichnet, dass** die Lichtaustrittswinkel (β) von in vertikaler Richtung beabstandeten holographisch-optischen Elementen (10,54) derart verschieden sind, dass sich die Lichtaustrittsbündel (28,56) in einer Betrachtungsebene (32) schneiden.

8. Projektionsschirm nach einem der Ansprüche 1-7, , **dadurch gekennzeichnet, dass** die holographisch-optischen Elemente (10,54) die Lichtaustrittsbündel (28,56) nur horizontal aufweiten.

9. Projektionssystem mit einem Projektionsschirm (30) nach einem der Ansprüche 1,3,4,7 oder 8 und einem Projektor (14), wobei der Projektor (14) zur Erzeugung der einzelnen Lichtbündel (16,18,20) der Farbauszüge jeweils eine Projektionseinrichtung (22,24,26) aufweist und der Abstand der Projektionseinrichtung auf die farbauszugsspezifischen Beugungswinkel derart abgestimmt ist, dass von jedem holographisch-optischen Element (10) die Lichtbündel der Farbauszüge zu einem Lichtaustrittsbündel (28) mit demselben Lichtaustrittswinkel (β) zusammengefaßt sind.

10. Projektionssystem mit einem Projektionsschirm (30) nach einem der Ansprüche 2-8 und einem Projektor (14), wobei der Projektor (14) nur eine Projektionseinrichtung (50) aufweist und die holographisch-optischen Elemente (54) für das Lichtbündel (52) jedes Farbauszugs je ein Beugungsgitter (58,60,62) aufweisen, die derart ausgebildet sind, dass die Lichtbündel (52) der Farbauszüge zu einem Lichtaustrittsbündel (56) mit demselben Lichtaustrittswinkel (β) zusammengefaßt sind.

11. Projektionssystem nach Anspruch 9 oder 10, **dadurch gekennzeichnet, dass** der Projektor (14) auf der Betrachterseite des Projektionsschirms (30) angeordnet ist und auf der Rückseite des Projektionsschirms (30) ein Spiegel (66) vorgesehen ist.

12. Projektionssystem nach einem der Ansprüche 9-11, **dadurch gekennzeichnet, dass** im Strahlengang des von der Projektionseinrichtung (22,24,26,50) abgegebenen Lichts eine Entzerrungslinse angeordnet ist.

13. Projektionssystem nach einem der Ansprüche 9-12, **dadurch gekennzeichnet, dass** in dem Projektor (14) eine elektronische Entzerrungseinrichtung vorgesehen ist.

## Claims

1. A projection screen, particularly for large-surface image projection, for representing images by back-projection, comprising a plurality of holographic-optical elements (10) arranged in an imaging plane and respectively adapted for imaging thereon partial regions of an image to be projected, said elements being configured to have the optical properties of a diffraction grating and at least one lens, wherein each holographic-optical element (10) is arranged to combine light bundles (16,18,20) of different chromatic components of the to-be-projected partial region which are incident under different light entry angles, into a common exiting light bundle (28) having a uniform light exit angle (β),
**characterized in**
**that** the holographic-optical elements (10) respectively comprise only one diffraction grating which diffracts the light bundles (16,18,20) of the individual chromatic components under different diffraction angles, and
each holographic-optical element (10,54) comprises a screen cylinder lens (38) including a plurality of cylinder lenses (36).

2. A projection screen, particularly for large-surface image projection, for representing images by back-projection, comprising a plurality of holographic-optical elements (54) arranged in an imaging plane and respectively adapted for imaging thereon partial regions of an image to be projected, said elements being configured to have the optical properties of a plurality of diffraction gratings and at least one lens, wherein each holographic-optical element (54) is arranged to combine a common light bundle (52) of all of the chromatic components of the to-be-projected partial region which are incident under the same light entry angle, into a common exiting light bundle (56) having a uniform light exit angle (β),
**characterized in**
**that** each holographic-optical element (10,54) comprises a screen cylinder lens (38) including a plurality of cylinder lenses (36).

3. The projection screen according to claim 1 or 2, **characterized in that** the distance between the viewing plane (32) and the screen cylinder lens (38) is large as compared to the distance between adjacent cylinder lenses (36).

4. The projection screen according to any one of claims 1-3, **characterized in that** the cylinder lenses (36) are arranged in one plane.

5. The projection screen according to any one of claims 2-4, **characterized in that** the holographic-optical elements (54) comprise respectively one diffraction grating (58,60,62) for the light bundle (52) of each chromatic component.

6. The projection screen according to any one of claims 2-5, **characterized in that** the holographic-optical element (54) comprises three different diffraction gratings (58,60,62) arranged either next to each other or above each other.

7. The projection screen according to any one of claims 1-6, **characterized in that** the light exit angles (β) of holographic-optical elements (10,54) spaced in vertical direction are different in such a manner that the exiting light bundles (28,56) will intersect each other in a viewing plane (32).

8. The projection screen according to any one of claim 1-7, **characterized in that** the holographic-optical elements (10,54) widen the exiting light bundles (28,56) only horizontally.

9. A projection system comprising a projection screen (30) according to any one of claims 1,3,4,7 or 8 and a projector (14), wherein the projector (14), for generating the individual light bundles (16,18,20) of the chromatic components, comprises respectively one projection device (22,24, 26), and the distance of the projection devices is.adjusted to the chromatic-component-specific diffraction angles in such a manner that each holographic-optical element (10) combines the light bundles of the chromatic components into one exiting light bundle (28) with an identical light exit angle (β).

10. A projection system comprising a projection screen (30) according to any one of claims 2-8 and a projector (14), wherein the projector (14) comprises only one projection device (50), and the holographic-optical elements (54) comprise a respective diffraction grating (58,60,62) for the light bundle (52) of each chromatic component, the diffraction gratings being arranged to combine the light bundles (52) of the chromatic components into one exiting light bundle (56) with an identical light exit angle (β).

11. The projection system according to claim 10 or 11, **characterized in that** the projector (14) is arranged on the viewer side of the projection screen (30) and that a mirror (66) is provided on the rear side of the projection screen (30).

12. The projection system according to any one of claims 9-11, **characterized in that** a rectification lens is arranged in the path of rays of the light emitted by the projection device (22,24,26,50).

13. The projection system according to any one of claim 9-12, **characterized in that** an electronic rectification devices is provided in the projector (14).

## Revendications

1. Ecran de projection, en particulier pour des projections d'images de grande taille, permettant de représenter des images par rétroprojection, comportant plusieurs éléments optiques holographiques (10) disposés dans un plan de projection, sur lesquels peuvent être respectivement représentées des zones partielles d'une image à projeter et qui sont configurés de telle sorte qu'ils possèdent les propriétés optiques d'un réseau de diffraction et d'au moins une lentille, chaque élément optique holographique (10) étant construit de telle sorte qu'il rassemble des faisceaux lumineux (16, 18, 20) de différentes composantes de couleurs de la zone partielle à projeter, qui entrent sous différents angles d'entrée de la lumière, pour former un faisceau lumineux de sortie commun (28) ayant un angle de sortie de la lumière unique (β) **caractérisé en ce que** les éléments optiques holographiques (10) présentent respectivement un seul réseau de diffraction, qui diffracte les faisceaux lumineux (16, 18, 20) des composantes de couleurs individuelles avec des angles de diffraction différents et **en ce que** chaque élément optique holographique (10, 54) présente une lentille cylindrique de trame (38) constituée de plusieurs lentilles cylindriques (36).

2. Ecran de projection, en particulier pour des projections d'images de grande taille, permettant de représenter des images par rétroprojection, comportant plusieurs éléments optiques holographiques (54) disposés dans un plan de projection, sur lesquels peuvent être respectivement représentées des zones partielles d'une image à projeter et qui sont configurés de telle sorte qu'ils possèdent les propriétés optiques de plusieurs réseaux de diffraction et d'au moins une lentille, chaque. élément optique holographique (54) étant construit de telle sorte qu'il rassemble un faisceau lumineux commun (52) de toutes les composantes de couleurs de la zone partielle à projeter, qui entrent sous le même angle d'entrée de la lumière, pour former un faisceau lumineux de sortie commun (56) ayant un angle de sortie de la lumière unique (β), **caractérisé en ce que** chaque élément optique holographique (10, 54) présente une lentille cylindrique de trame (38) constituée de plusieurs lentilles cylindriques (36).

3. Ecran de projection selon la revendication 1 ou 2, **caractérisé en ce que** la distance entre le plan d'observation (32) et la lentille cylindrique de trame (38) est supérieure à la distance entre des lentilles cylindriques voisines (36).

4. Ecran de projection selon l'une des revendications 1 à 3, **caractérisé en ce que** les lentilles cylindriques (36) sont disposées dans un plan.

5. Ecran de projection selon l'une des revendications 2 à 4, **caractérisé en ce que** les éléments optiques holographiques (54) présentent chacun un réseau de diffraction (58, 60, 62) pour le faisceau lumineux (52) de chaque composante de couleur.

6. Ecran de projection selon l'une des revendications 2 à 5, **caractérisé en ce que** l'élément optique holographique (54) présente trois réseaux de diffraction différents (58, 60, 62), qui sont disposés les uns à côté des autres ou les uns au-dessus des autres.

7. Ecran de projection selon l'une des revendications 1 à 6, **caractérisé en ce que** les angles de sortie de la lumière (β) de plusieurs éléments optiques holographiques (10, 54) espacés dans une direction verticale diffèrent de telle sorte que les faisceaux lumineux de sortie (28, 56) se coupent dans un plan d'observation (32).

8. Ecran de projection selon l'une des revendications 1 à 7, **caractérisé en ce que** les éléments optiques holographiques (10, 54) n'élargissent les faisceaux lumineux de sortie (28, 56) qu'horizontalement.

9. Système de projection comportant un écran de projection (30) selon l'une des revendications 1, 3, 4, 7 et 8 ainsi qu'un projecteur (14), le projecteur (14) présentant, pour la génération des faisceaux lumineux individuels (16, 18, 20) des composantes de couleurs, respectivement un dispositif de projection (22, 24, 26), l'éloignement des dispositifs de projection sous les angles de diffraction spécifiques aux composantes de couleurs étant déterminé de telle sorte que les faisceaux lumineux des composantes de couleurs sont rassemblés par chaque élément optique holographique (10) pour former un faisceau lumineux de sortie (28) ayant le même angle de sortie de la lumière (β).

10. Système de projection comportant un écran de projection (30) selon l'une des revendications 2 à 8 ainsi qu'un projecteur (14), le projecteur (14) présentant un seul dispositif de projection (50), les éléments optiques holographiques (54) présentant, pour le faisceau lumineux (52) de chaque composante de couleur chacun un réseau de diffraction (58, 60, 62), qui sont configurés de telle sorte que les faisceaux lumineux (52) des composantes de couleurs sont rassemblés en un faisceau lumineux de sortie (56) ayant le même angle de sortie de la lumière (β).

11. Système de projection selon la revendication 9 ou 10, **caractérisé en ce que** le projecteur (14) est disposé du côté d'observation de l'écran de projection (30) et **en ce qu'**un miroir (66) est prévu au dos de l'écran de projection (30).

12. Système de projection selon l'une des revendications 9 à 11, **caractérisé en ce qu'**une lentille de correction est disposée sur le parcours optique de la lumière émise par le dispositif de projection (22, 24, 26, 50).

13. Système de projection selon l'une des revendications 9 à 12, **caractérisé en ce qu'**un dispositif de correction électronique est prévu dans le projecteur (14).
